# EUROPÄISCHE PATENTSCHRIFT

(11) **EP 3 150 039 B1**
(45) Veröffentlichungstag und Bekanntmachung des Hinweises auf die Patenterteilung: **23.05.2018**
(21) Anmeldenummer: 16401065.4
(22) Anmeldetag: 13.09.2016
(51) Int. Cl.: A01C 5/06

(54) **SÄSCHAR**
SEED DRILL COULTER
SOC DE SEMOIR

(30) Priorität: 01.10.2015 DE 102015116638
(43) Veröffentlichungstag der Anmeldung: 05.04.2017
(73) Patentinhaber: Amazonen-Werke H. Dreyer GmbH & Co. KG, 49205 Hasbergen (DE)
(72) Erfinder: Wilken, Martin, 26123 Oldenburg (DE); Tanke, Christian, 26135 Oldenburg (DE)

(56) Entgegenhaltungen:
- AU-A4- 2010 100 137
- US-A- 624 118
- US-A- 709 637
- US-A- 1 204 306
- US-A- 2 540 262

## Beschreibung

Die Erfindung betrifft ein Doppelscheibenschar gemäß des Oberbegriffes des Patentanspruches 1.
Durch die US 709 637 ist ein Doppelscheibenschar gemäß des Oberbegriffes des Patentanspruches 1 bekannt. Dieses Doppelscheibenschar weist einen Halterungsteil auf, der zwischen dem Scharhalter und der die Scharscheiben des Doppelscheibenschares tragenden Lagerung angeordnet ist. An dem Halterungsteil sind mittels Schrauben die Abstreifer in der oberen Hälfte und im vorderen Bereich der Scharscheiben angeordnet
Ein weiteres Säschar ist in der Praxis bekannt geworden. Dieses als Doppelscheibenschar ausgebildete Säschar weist zwei V-förmig zueinander und jeweils schräg zur Fahrtrichtung und zur Senkrechten angestellte und an einem Scharhalter drehbar angeordnete Scharscheiben auf. Die V-förmig zueinander angestellten Scharscheiben sind in sich nach hinten und oben öffnender Bauweise zueinander angeordnet. Auf der jeweils äußeren Außenseite der Scharscheiben ist in deren oberer Hälfte, vorzugsweise im vorderen Bereich mittels eines an einem Scharhalter befestigten Halterungselementes ein die äußeren Außenseiten der Scharscheiben reinigender Abstreifer, die auch als Außenabstreifer bezeichnet werden, angeordnet. Zumindest im vorderen oberen Viertel der Scharscheiben und vor diesen Scharscheiben ist eine an dem kreisförmigen Umfang der Scharscheiben angepasste und an dem Scharhalter befestigte Abdeckung angeordnet. Die Anordnung dieser sog. Außenabstreifer ist bisher sehr aufwändig. Diese Außenabstreifer werden mit separaten Halterungselementen an dem Scharhalter zusätzlich neben der Abdeckung mit separaten Befestigungselementen befestigt.
Der Erfindung liegt die Aufgabe zugrunde, eine vereinfachte Anordnung und Befestigung der Außenabstreifer am Säschar zu schaffen.
Die Aufgabe wird erfindungsgemäß durch die kennzeichnenden Merkmale des Anspruches 1 gelöst.

Infolge dieser Maßnahmen lassen sich die Abstreifer zum Abstreifen der an der Außenseite der Scharscheiben anhaftenden Bodenteile über die Befestigung an der Abdeckung am Scharhalter in äußerst einfacher und verbesserter Weise befestigen. Da die Abdeckung sich in unmittelbarer Nähe zu dem abzustreifenden Außenbereich der Scharscheiben befindet, können die Halterungselemente zum Tragen der Abstreifer optimiert ausgelegt gestaltet werden. Es ergeben sich so sehr kleine kompakte Halterungselemente zum Befestigen der Außenabstreifer. Es brauchen keine zusätzlichen Elemente zur Befestigung der Außenabstreifer an dem Scharhalter vorgesehen zu werden, so dass zusätzlich auch noch insgesamt eine Gewichtsreduzierung erzielt wird. In einfacher und nicht störender Weise lassen sich die Halterungselemente bei der Fertigung der Abdeckung in die Abdeckung ohne nennenswerte Mehrkosten integrieren. Somit ist das jeweilige Halterungselement für den jeweiligen Außenabstreifer in erfindungsgemäßer Weise integrierter Bestandteil der Abdeckung.

Weiterhin sind auf jeder Außenseite der Scharscheiben des Doppelscheibenschares in einfacher Weise die Abstreifer angeordnet. Auch eine einfache Integration und Anordnung der Halterungselemente an der Abdeckung wird erreicht.
Weiterhin wirken nur möglichst geringe Kräfte auf die Abdeckung. Somit werden die von den Abstreifern auf die Halterungselemente einwirkenden Halterungskräfte auf möglichst kurzen und direkten Wege in den Scharhalter eingeleitet.

Um auch eventuell auf den Innenseiten der Scharscheiben anhaftende Bodenteile von den Scharscheiben abstreifen zu können, kann vorgesehen sein, dass auf der oberen Rückseite zwischen den beiden Scharscheiben ein zumindest die äußeren Innenseiten reinigender Innenabstreifer angeordnet ist.

Bei einem Säschar, bei dem die Abdeckung mittels einer Befestigungsvorrichtung an dem Scharhalter befestigt ist, ist vorgesehen, dass die Befestigungsvorrichtung eine zumindest ein Formschlusselement aufweisende Schraubverbindung aufweist. Infolge dieser Maßnahme wird erreicht, dass die Abdeckung mit den Außenabstreifern mit einer festen und definierten Anordnung an dem Scharhalter angeordnet ist und so in gesicherter Weise angeordnet. Diese feste und definierte Anordnung mit einer verbesserten Sicherung kann noch dadurch verbessert werden, dass Befestigungsvorrichtung einen konischen Sitzbereich zwischen Scharhalter und Abdeckung aufweist.

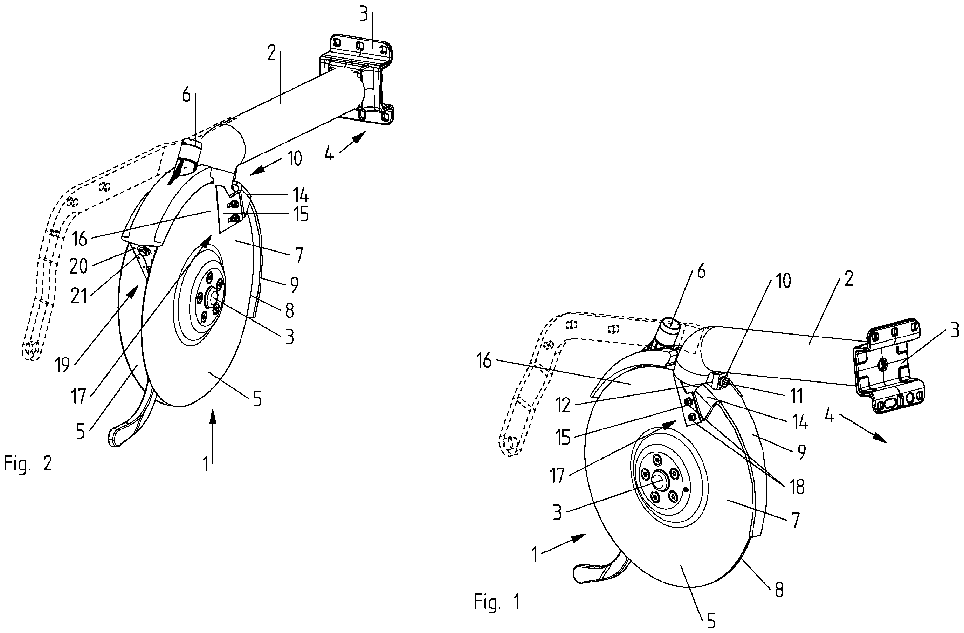

Weitere Einzelheiten der Erfindung sind der Beispielsbeschreibung und den Zeichnungen zu entnehmen. Die Zeichnungen zeigen
- Fig.1: ein als Doppelscheibenschar ausgebildetes Säschar in perspektivischer Darstellung in der Ansicht von schräg vorne,
- Fig.2: das Doppelscheibenschar in perspektivischer Darstellung in der Ansicht von schräg hinten,

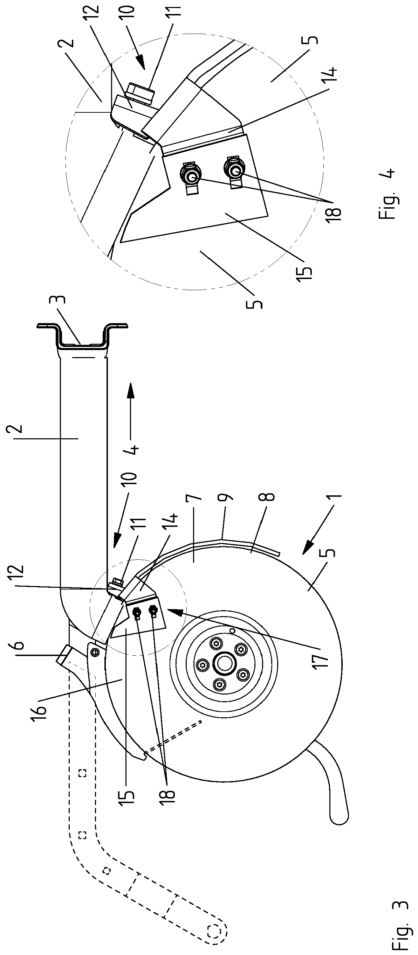

- Fig.3: das Doppelscheibenschar in Seitenansicht,
- Fig.4: die Anordnung des Außenabstreifers in der Ansicht gemäß Fig.3, jedoch in Teilansicht und vergrößerter Darstellung,

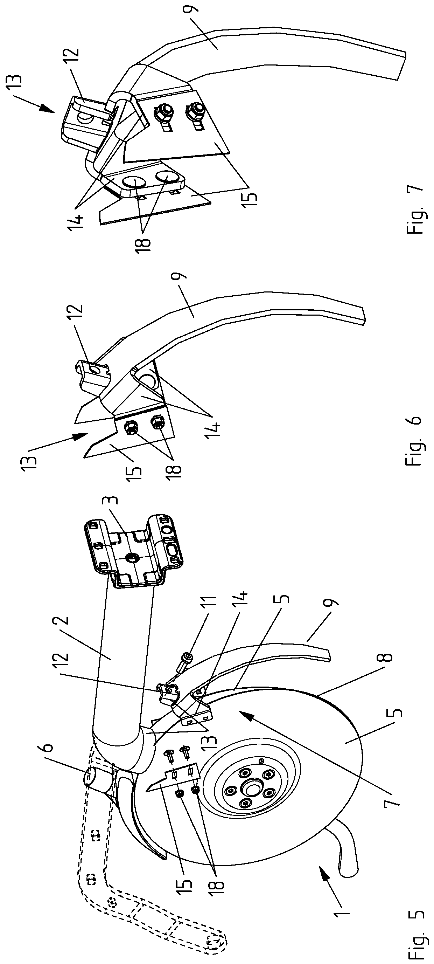

- Fig.5: das Doppelscheibenschar in perspektivischer Darstellung in der Ansicht von schräg vorne, wobei die Abdeckung mit den Außenabstreifern in noch nicht montierter Position der Abdeckung beabstandet zu der Vorderseite der Scharscheiben dargestellt ist,
- Fig.6: die Abdeckung mit den daran befestigten Außenabstreifern in perspektivischer Darstellung in der Ansicht von schräg vorne und in vergrößertem Maßstab und
- Fig.7: die Abdeckung mit den daran befestigten Außenabstreifern in perspektivischer Darstellung in der Ansicht von schräg hinten und in vergrößertem Maßstab.

Das als Doppelscheibenschar 1 ausgebildete Säschar weist den Scharhalter 2 auf. Der Scharhalter 2 ist auf seiner Vorderseite mit einer gelenkartigen Anbindung 3 ausgestattet, mittels welcher er an einem nicht dargestellten Querbalken in bekannter Weise auf und ab bewegbar angeordnet ist. An dem rückwärtigen Ende des Scharhalters 2 sind auf jeder Seite mittels Drehlager 3 in bekannter Weise zwei V-förmig zueinander und jeweils schräg zur Fahrtrichtung 4 und zur Senkrechten angestellte und an dem Scharhalter frei drehbar angeordnete Scharscheiben 5 gelagert. Die V-förmig zueinander angestellten Scharscheiben 5 sind in sich nach hinten und oben öffnender Bauweise zueinander angeordnet, wie die Zeichnungen zeigen. Die Scharscheiben 5 des Doppelscheibenschars 1 ziehen eine Furche in dem Boden, in welcher das dem Säschar 1 zugeführte Saatgut abgelegt wird. Hierzu ist auf der Rückseite des Doppelscheibenschars 1 eine Saatgutleitung 6 dem Schar 1 zugeordnet. Diese Saatgutleitung 6 mündet im hinteren unteren Bereich des Doppelscheibenschars 1 aus. Das obere Ende der Saatgutleitung 6 ist in nicht dargestellter Weise an Zuleitungsschläuche einer Sämaschine angeschlossen.

Im vorderen oberen Viertel 7 der Scharscheiben 5 und vor diesen Scharscheiben 5 ist eine an den kreisförmigen Umfang 8 der Scharscheiben 5 angepasste Abdeckung 9 angeordnet. Die Abdeckung 9 ist mittels einer Befestigungsvorrichtung 10 an dem Scharhalter 2 befestigt. Die Befestigungsvorrichtung 10 weist die Schraubverbindung 11 mit dem Formschlusselement 12 auf. Weiterhin weist die Befestigungsvorrichtung 10 einen konischen Sitzbereich 13 zwischen Scharhalter 2 und Abdeckung 9 auf. Hierdurch wird eine festsitzende und verdrehsichere Befestigung der Abdeckung 9 an dem Scharhalter 2 mit einer eine Schraube aufweisenden Schraubverbindung 11 geschaffen.

Die Abdeckung 9 weist beidseitig jeweils ein Halterungselement 14 für einen auf jeder Seite des Doppelscheibenschars 1 angeordneten als Außenabstreifer 15 ausgebildeten Abstreifer auf. Das jeweilige Halterungselement 14 ist gegenüber der Abdeckung nach unten abgebogen. Durch die entsprechende Ausgestaltung von Abdeckung 9 und Halterungselemente 14 sind die Halterungselemente 14 an der Abdeckung 9 in integrierter Weise angeordnet. Somit ist das jeweilige Halterungselement 14 für den jeweiligen Abstreifer 15 Bestandteil der Abdeckung 9. Weiterhin sind die Halterungselemente 14 an der Abdeckung 9 in dem Bereich der Befestigungsvorrichtung 10 zur Befestigung der Abdeckung 9 an dem Scharhalter 2 angeordnet.

Der jeweilige äußeren Außenseite 16 der Scharscheiben 5 ist in deren oberer Hälfte 17, vorzugsweise im vorderen Bereich 16 mittels eines an einem Scharhalter 2 über die Abdeckung 9 befestigtes Halterungselement 14 ein die äußeren Außenseiten 16 der Scharscheiben 5 reinigender Abstreifer 15 angeordnet, die den jeweiligen Abstreifer 15 tragenden Halterungselemente 14 sind wie bereits erwähnt, an der Abdeckung 9 befestigt sind. Die Halterungselemente 14 an der Abdeckung 9 in dem Bereich der Befestigungsvorrichtung 10 zur Befestigung der Abdeckung 9 an dem Scharhalter 2 angeordnet. Die Abstreifer 15 sind mittels als Schrauben 18 ausgebildeten Befestigungselementen einstellbar angeordnet.

Weiterhin ist im Bereich der oberen Rückseite 19 zwischen den beiden Scharscheiben 5 ein die äußeren Innenseiten der Scharscheiben 5 reinigender Innenabstreifer 20 angeordnet. Dieser in Abstreifer 20 ist über ein Befestigungselement 21 an dem Scharhalter 2 in geeigneter Weise befestigt.

## Patentansprüche

1. Doppelscheibenschar (1) mit zwei V-förmig zueinander und jeweils schräg zur Fahrtrichtung (4) und zur Senkrechten angestellten und an einem Scharhalter (2) drehbar angeordneten Scharscheiben (5), wobei die V-förmig zueinander angestellten Scharscheiben (5) in sich nach hinten und oben öffnender Bauweise zueinander angeordnet sind, wobei jeweils der äußeren Außenseite (17) der Scharscheiben (5) in deren oberer Hälfte, und im vorderen Bereich mittels eines an einem Scharhalter (2) befestigten Halterungselementes ein die äußeren Außenseiten (17) der Scharscheiben (5) reinigender Abstreifer (15) angeordnet ist, wobei zumindest im vorderen oberen Viertel der Scharscheiben (5) und vor diesen Scharscheiben (5) eine an dem kreisförmigen Umfang (8) der Scharscheiben (5) angepasste und an dem Scharhalter (2) befestigte Abdeckung (9) angeordnet ist, **dadurch gekennzeichnet, dass** die den jeweiligen Abstreifer (15) tragenden Halterungselemente (14) an der Abdeckung (9) befestigt sind, dass das jeweilige Halterungselement (14) für den jeweiligen Abstreifer (9) Bestandteil der Abdeckung (9) ist, dass die Abdeckung (9) beidseitig jeweils ein Halterungselement (14) für den jeweiligen Abstreifer (15) aufweist, dass das jeweilige Halterungselement (14) gegenüber der Abdeckung (9) nach unten abgebogen ist, dass die Halterungselemente (14) an der Abdeckung (9) in integrierter Weise angeordnet sind, dass die Halterungselemente (14) an der Abdeckung (9) in dem Bereich der Befestigung der Abdeckung (9) an dem Scharhalter (2) angeordnet sind.

2. Doppelscheibenschar nach zumindest einem der vorstehenden Ansprüche, **dadurch gekennzeichnet, dass** auf der oberen Rückseite zwischen den beiden Scharscheiben (5) ein zumindest die äußeren Innenseiten reinigender Innenabstreifer (20) angeordnet ist.

3. Doppelscheibenschar nach zumindest einem der vorstehenden Ansprüche, wobei die Abdeckung (9) mittels einer Befestigungsvorrichtung (10) an dem Scharhalter (2) befestigt ist, **dadurch gekennzeichnet, dass** die Befestigungsvorrichtung (10) eine zumindest ein Formschlusselement (12) aufweisende Schraubverbindung (11) aufweist.

4. Doppelscheibenschar nach Anspruch 3, **dadurch gekennzeichnet, dass** die Befestigungsvorrichtung (10) einen konischen Sitzbereich (13) zwischen Scharhalter (2) und Abdeckung (9) aufweist.

## Claims

1. Double disc coulter (1) having two coulter discs (5) which are set in a V-shaped manner with respect to each other and in each case obliquely with respect to the direction of travel (4) and to the vertical and are arranged rotatably on a coulter holder (2), wherein the coulter discs (5) set in a V-shaped manner with respect to each other are arranged in a rearwardly and upwardly opening construction with respect to each other, wherein a scraper (15) cleaning the outer outsides (17) of the coulter discs (5) is arranged in each case of the outer outside (17) of the coulter discs (5), in the upper half thereof, and in the front region by means of a holding element fastened to a coulter holder (2), wherein a covering (9) which is matched to the circular circumference (8) of the coulter discs (5) and is fastened to the coulter holder (2) is arranged at least in the front upper quarter of the coulter discs (5) and in front of said coulter discs (5), **characterized in that** the holding elements (14) carrying the respective scraper (15) are fastened to the covering (9), **in that** the respective holding element (14) for the respective scraper (9) is part of the covering (9), **in that** the covering (9) has in each case on both sides a holding element (14) for the respective scraper (15), **in that** the respective holding element (14) is bent downwards in relation to the covering (9), **in that** the holding elements (14) are arranged on the covering (9) in an integrated manner, and **in that** the holding elements (14) are arranged on the covering (9) in the region of the fastening of the covering (9) to the coulter holder (2) .

2. Double disc coulter according to at least one of the preceding claims, **characterized in that** an inner scraper (20) cleaning at least the outer insides is arranged on the upper rear side between the two coulter discs (5).

3. Double disc coulter according to at least one of the preceding claims, wherein the covering (9) is fastened to the coulter holder (2) by means of a fastening device (10), **characterized in that** the fastening device (10) has a screw connection (11) having at least one form-fitting element (12).

4. Double disc coulter according to Claim 3, **characterized in that** the fastening device (10) has a conical seat region (13) between coulter holder (2) and covering (9).

## Revendications

1. Soc à double disque (1) avec deux disques de soc (5) montés en forme de V l'un par rapport à l'autre et chacun en oblique par rapport à la direction de déplacement (4) et à la verticale et disposés de façon rotative sur un porte-soc (2), dans lequel les disques de soc (5) montés en forme de V l'un par rapport à l'autre sont disposés l'un par rapport à l'autre en un montage s'ouvrant vers l'arrière et vers le haut, dans lequel un racloir (15) nettoyant les côtés extérieurs externes (17) des disques de soc (5) est disposé respectivement le côté extérieur externe (17) des disques de soc (5) dans leur moitié supérieure, et dans la région avant au moyen d'un élément de support fixé à un porte-soc (2), dans lequel un capot (9) adapté au contour circulaire (8) des disques de soc (5) et fixé au porte-soc (2) est disposé au moins dans le quart supérieur avant des disques de soc (5) et devant ces disques de soc (5), **caractérisé en ce que** les éléments de support (14) portant le racloir respectif (15) sont fixés au capot (9), **en ce que** l'élément de support respectif (14) pour le racloir respectif (9) fait partie du capot (9), **en ce que** le capot (9) présente de part et d'autre chaque fois un élément de support (14) pour le racloir respectif (15), **en ce que** l'élément de support respectif (14) est plié vers le bas par rapport au capot (9), **en ce que** les éléments de support (14) sont disposés de façon intégrée sur le capot (9), **en ce que** les éléments de support (14) sont disposés sur le capot (9) dans la région de la fixation du capot (9) au porte-soc (2).

2. Soc à double disque selon au moins une des revendications précédentes, **caractérisé en ce qu'**un racloir intérieur (20) nettoyant au moins les côtés intérieurs externes est disposé sur le côté supérieur arrière entre les deux disques de soc (5).

3. Soc à double disque selon au moins une des revendications précédentes, dans lequel le capot (9) est fixé au porte-soc (2) au moyen d'un dispositif de fixation (10), **caractérisé en ce que** le dispositif de fixation (10) présente une liaison vissée (11) présentant au moins un élément d'emboîtement (12).

4. Soc à double disque selon la revendication 3, **caractérisé en ce que** le dispositif de fixation (10) présente une zone d'appui conique (13) entre le porte-soc (2) et le capot (9).
